# EUROPÄISCHE PATENTSCHRIFT

(11) **EP 3 929 675 B1**
(45) Veröffentlichungstag und Bekanntmachung des Hinweises auf die Patenterteilung: **06.11.2024**
(21) Anmeldenummer: 21191796.8
(22) Anmeldetag: 29.01.2019
(51) Int. Cl.: G05B 19/042, B25J 9/16, G06Q 10/06, G06F 3/03, G06F 3/042, G06F 3/01, G05B 19/418

(54) **ÜBERWACHUNGS- UND BEDIENSYSTEM FÜR EINEN FERTIGUNGSARBEITSPLATZ UND VERFAHREN ZUM FERTIGEN EINES PRODUKTS ODER TEILPRODUKTE**
MONITORING AND CONTROL SYSTEM FOR A PRODUCTION WORKSPACE AND METHOD FOR PRODUCING A PRODUCT OR PARTIAL PRODUCTS
SYSTÈME DE SURVEILLANCE ET DE COMMANDE POUR UN POSTE DE TRAVAIL DE PRODUCTION ET PROCÉDÉ DE FABRICATION D'UN PRODUIT OU D'UN SOUS-PRODUIT

(30) Priorität: 29.01.2018 DE 102018000733
(43) Veröffentlichungstag der Anmeldung: 29.12.2021
(62) Teilanmeldung aus: 19154202.6
(73) Patentinhaber: IGZ Ingenieurgesellschaft für logistische Informationssysteme mbH, 95685 Falkenberg (DE)
(72) Erfinder: Zrenner, Johann, 95685 Falkenberg (DE)
(74) Vertreter: Strehl Schübel-Hopf & Partner

(56) Entgegenhaltungen:
- WO-A1-2014/028959
- DE-A1- 102014 113 264
- US-A1- 2006 104 479
- US-A1- 2016 125 654

## Beschreibung

Die Erfindung betrifft ein Überwachungs- und Bediensystem für einen Fertigungsarbeitsplatz nach dem Oberbegriff des Anspruchs 1 und ein Verfahren zum Fertigen eines Produkts oder Teilprodukts nach dem Oberbegriff des Anspruchs 15.

Bei der Fertigung werden u. A. Montagekomponenten gemäß Montageanleitung bzw. Fertigungsauftrag aus einem oder mehreren Behältern entnommen und am Fertigungsarbeitsplatz montiert. Andere Fertigungsschritte können das manuelle Bearbeiten eines Werkstücks sein, wie zum Beispiel das Schleifen, Polieren, Bohren, und/oder Lackieren. Die Arbeitsschritte des Fertigungsauftrags werden durch einen im Folgenden auch als Werker bezeichnete(n) Mitarbeiterin/Mitarbeiter an einem Fertigungsarbeitsplatz durchgeführt.

Die Arbeitsanweisungen zum aktuellen Fertigungsschritt erhält der Werker über einen Bildschirmdialog am Arbeitsplatz. In der Regel wird ein zuvor bereitgestelltes Werkstück bearbeitet. Dieses Werkstück wird zu Beginn des Fertigungsschritts mittels eines Werkstückträgers fixiert, damit dessen Position und Orientierung den für den Fertigungsschritt definierten Parametern entspricht. Fertigungsaufträge können neben der Montage auch andere Arbeiten mit definierbaren Teilschritten, wie z. B. eine wiederkehrende Werker-Bewegung, Materialentnahme, Einsatz von Werkzeug usw. beinhalten.

Es ist bekannt, Fertigungsarbeitsplätze mit Überwachungs- und Bediensystemen auszustatten, die einen fehlerhaften Eingriff des Werkers in einem Behälter detektieren. Dazu ist oberhalb der Eingriffsöffnung des Behälters eine gitterartige Anordnung von Lichtschranken vorgesehen. Die Möglichkeiten zur Fehlererkennung sind in solchen Systemen aber sehr enge Grenzen gesetzt.

Das Dokument WO 2014/028959 A1 offenbart ein System zur Unterstützung eines Arbeiters in einer Anlage zur Manipulation von Waren, in dem die Bewegungen des Arbeiters mit einer Kamera überwacht werden. Das Dokument US 2006/104479 A1 offenbart ein System zum Überwachen von Kassierern an Supermarktkassen.

Der Erfindung liegt insbesondere die Aufgabe zugrunde, ein Überwachungs- und Bediensystem für einen Fertigungsarbeitsplatz und ein Verfahren zur Überwachung der Einhaltung der definierten Arbeitsschrittfolge in der Fertigung bereitzustellen, durch welche die Fehlerrate beim Fertigungsprozess signifikant minimiert werden kann. Gleiches gilt für die Einhaltung der Reihenfolge, sowie auch für die richtige Positionierung und/oder Ausrichtung der anzubringenden Komponenten. Es können auch bildverarbeitungstechnisch erkennbare Eigenschaften am Werkstück geprüft werden, bspw. ob der Zuschnitt richtig erfolgt ist, oder ob sich die erzeugte Schweißnaht an der erwarteten Position befindet. Darüber hinaus wird die Bedienung des angeschlossenen Systems für den Werker wesentlich vereinfacht werden, indem er beispielsweise Arbeitsschritte durch automatische Erkennung des erwarteten Arbeitsschritts oder mittels definierter Gesten berührungslos weiter bzw. zurückschalten kann. Ein weiterer Vorteil ist, dass der Werker die Hände frei hat für die eigentliche Fertigungstätigkeit, da die Bestätigung und Rückmeldung der Arbeitsschritte im Fertigungssystem vollautomatisch erfolgt. Oftmals ist es für Werker mit Handschuhen oder in öliger Umgebung schwierig das Fertigungs-IT-System am Arbeitsplatz händisch zu bedienen. Außerdem kann der Bildschirm des Fertigung-IT-Systems aus Sicht der Blick-Ergonomie (z. B. mittig über dem Arbeitsplatz) und nicht zwingend seitlich im Griffbereich des Werkers positioniert werden.

Die Aufgabe wird gelöst durch ein Überwachungs- und Bediensystem mit den Merkmalen des Anspruchs 1 und durch ein Verfahren mit den Merkmalen des Anspruchs 15. Vorteilhafte Ausgestaltungen der Erfindung ergeben sich aus den Unteransprüchen.

Die Erfindung betrifft ein Überwachungs- und Bediensystem für einen Fertigungsarbeitsplatz für wenigstens einen Werker zur Durchführung wenigstens eines manuellen Fertigungsschritts, wobei der Fertigungsarbeitsplatz mehrere Objekte in einem veränderbaren Konfigurations- oder Bewegungszustand umfasst, wobei das System eine Steuerung mit graphischen oder akustischen Benutzerschnittstelle zur Wiedergabe von Arbeitsanweisungen für den Fertigungsschritt und eine Sensoranordnung zum berührungslosen Führen und/oder Überwachen eines von dem wenigstens einen Werker durchgeführten Fertigungsschritts umfasst.

Es wird vorgeschlagen, dass die Steuerung dazu ausgelegt ist, abhängig von den von der Kamera erfassten Bilddaten, insbesondere beim Erkennen eines bestimmten Konfigurations- oder Bewegungszustands, einen Prozess auszulösen. Der Prozess kann insbesondere das Umschalten des Displays zur Darstellung der Arbeitsanweisungen für den nächsten Fertigungsschritt, zur Darstellung einer Fehlermeldung oder eines besonderen Hinweises oder anderer Informationen umfassen. Ferner kann der Prozess die Speicherung von Daten in einer Produktdatenbank auslösen oder eine Quittierung oder Verbuchung von Vorgängen, die dann gespeichert werden. Außerdem kann der Prozess die Anforderung oder den Abtransport von Behältern oder Werkstücken betreffen und das Auslösen eines Steuersignals für Fördertechnik umfassen.

Der Prozess kann auch unmittelbar die Steuerung von Maschinen oder anderen Geräten am Fertigungsarbeitsplatz betreffen. Beispiele sind:
- Werkzeugparameter (Drehmoment, Drücke, Gas- oder Stromversorgung eines Schweißgeräts, Umdrehungszahlen von Bohrern oder Fräsen) werden abhängig von der erkannten Anwendung automatisch oder teilautomatisch eingestellt.
- Beleuchtung am Arbeitsplatz wird automatisiert eingestellt oder geregelt, so dass der Werker (oder die Kamera) die relevanten Bereiche gut einsehen kann.
- Die Bildinformation wird bei der Auswertung von Sensorsignalen genutzt. (z.B.: kurzeitiges Überhitzen eines Bauteils mit Temperatursensor wird toleriert, weil man erkennt, dass der Werker gerade einen Schweißbrenner angeschaltet hat.
- Wenn erkannt wird, dass das Produkt fertig ist, wird automatisch der Abtransport des Werkstückträgers per Werkstückträgertransportbahn oder des Werkstücks per Fördertechnik ausgelöst.

Als manueller Fertigungsschritt soll in diesem Zusammenhang ein Fertigungsschritt bezeichnet werden, der wenigstens einen Teilschritt enthält, der einen manuellen Eingriff eines menschlichen Werkers umfasst, beispielsweise die Montage eines Bauteils, die Entnahme eines Bauteils aus einem Behälter, die Benutzung eines Handwerkzeugs, die Prüfung und/oder Kontrolle eines Werkstücks durch den Werker.

Überwachbare Objekte im Sinne der Erfindung sind insbesondere Werkstücke, Komponenten, Werkstückträger, Werkzeuge und auch der Werker.

Als Konfigurations- oder Bewegungszustand soll in diesem Zusammenhang sowohl die statische räumliche Konfiguration des Objekts als auch ein Bewegungszustand des Objekts bezeichnet werden. Als Bewegungszustand sollen hier insbesondere charakteristische Bewegungen bei der Fertigung wie beispielsweise Einsetzen einer Komponente, Schrauben, Polieren, der Einsatz eines Werkzeugs oder dergleichen bezeichnet werden, die von der Steuerung durch Bewegungen oder Bewegungsmuster der Komponente, des Werkzeugs oder des Werkers erkannt werden können, die mittels Bildverarbeitung aus den Daten der Kamera extrahiert werden können. Es können aber auch Konfigurations- oder Bewegungszustände erkannt und genutzt werden, die von der eigentlichen Fertigung unabhängig sind, beispielsweise ein Winken oder eine andere Geste des Werkers, das Fehlen eines Werkzeugs oder Bauteils an seinem Ablageort oder dergleichen, die direkte oder indirekte Rückschlüsse auf den Fortschritt des Fertigungsvorgangs erlauben.

Dabei kommen insbesondere periodische Bewegungsmuster als charakteristische Konfigurations- oder Bewegungszustände eines Fertigungsschritts in Betracht, die sich mittels Bildverarbeitung gut erkennen lassen. Beispielsweise beim Schrauben, Polieren oder Hämmern kommt es zu periodischen Bewegungsmustern mit charakteristischen Frequenzen von 1 - 5Hz. Nach der Erfindung wird vorgeschlagen, diese Frequenzkomponenten mit einem Bandpassfilter aus einer Kurzzeit-Fouriertransformation zu Aufnahmeintervallen von einigen Sekunden, beispielsweise 2 - 10 Sekunden, herauszufiltern, im Frequenzspektrum der gefilterten Daten optional nach Peaks zu suchen und dieser herauszufiltern und die verbleibenden Daten orts- und kontextabhängig zu bewerten. Die ortsabhängige Bewertung kann insbesondere auf die räumliche Beziehung zum Körper des Benutzers oder zum Werkstück abstellen. Eine periodische Bewegung auf der Oberfläche des Werkstücks (erkannt durch Entfernungsmessung der Tiefenkamera kombiniert mit der Abmessungsdaten aus der Produktdatenbank und Positionierung des Werkstücks) wird bspw. als "Polieren" klassifiziert und eine periodische Bewegung neben dem Kopf des Werkers als "Winken". Auch kann die Dauer des Vorgangs überwacht werden und bei Bedarf eine Warnung ausgegeben werden, wenn der Werker die maximal erlaubte Polierzeit überschreitet. Dazu wird die Dauer einer erkannten Tätigkeit mit zuvor festgelegten Extremwerten verglichen und bei Überschreitung ein Steuersignal ausgegeben. Alternativ kann gezählt werden, wie oft der vollständige Bewegungsablauf wiederholt wurde und bspw. nach der dritten Wiederholung zur nächsten Arbeitsanweisung gewechselt werden.

Wenn eine Identifikation des Werkers erfolgt, sei es durch Login oder durch bildgestützte Methoden, kann auch eine individualisierte Gestenerkennung realisiert werden, die Vorlieben und körperliche Besonderheiten des Werkers berücksichtigt. Gleiches gilt für die Arbeitsplatzkonfiguration, welche an den Werker automatisch angepasst wird und so ein möglichst ergonomischer Arbeitsplatz gewährleistet wird.

In einer besonders vorteilhaften Ausgestaltung der Erfindung ist die die Kamera als Tiefenkamera ausgestaltet, beispielsweise mit TOF (Time-of-Flight) - Technik. Andere Technologien für 3D- oder Stereokameras können ebenfalls eingesetzt werden. Beispielsweise kann ein Kamerasystem verwendet werden, wie es aus dem Bereich Videospiele bzw. Spielekonsolen bekannt ist. In diesen Kamerasystemen wird zum Beispiel ein Muster bestehend aus Infrarotlichtpunkten ausgestrahlt. Durch die Verzerrung des Musters im Raum kann ein dreidimensionales Modell errechnet werden. Dieses Modell kann mit Hilfe von statistischen Auswertungen oder durch Vergleich mit bekannten Referenzmustern ausgewertet werden. Dadurch können beispielsweise Positionen und Ausmaße von Objekten sowie Gesten von Mitarbeitern erkannt werden. Alternativ können dreidimensionale Modelle auch mit Hilfe mehrerer Kameras mit unterschiedlichen Blickwinkeln in an sich bekannter Weise berechnet werden. Allgemein kann jeder Sensor eingesetzt werden, welcher die benötigten 3D-Informationen (3D-Punktwolke) zum Fertigungsarbeitsplatz liefert.

Insbesondere für die häufig wechselnden Konfigurationen von Fertigungsarbeitsplätzen, die regelmäßig umgebaut werden müssen, und aufgrund der Bewegung des Werkers im dreidimensionalen Raum, hat die dreidimensionale Auflösung der Bilddaten gegenüber herkömmlichen Kameras für zweidimensionale Aufnahmen deutliche Vorteile.

Besondere Vorteile bietet die Verwendung einer Tiefenkamera für die Nutzung und Definition von virtuellen Bestätigungstastern. Über Arbeitsplatzkonfiguration und/oder bezogen auf einen Arbeitsplan können ein oder mehrere virtuelle Bestätigungstaster hinterlegt werden. Diese ersetzen physische Bestätigungstaster oder Bedienelemente im Arbeitsdialog zum Ausführen von Aktionen im Rahmen des Montage- oder Fertigungsprozesses, d. h. wenn die Sensoreinheit erkennt, dass der für den zugehörigen Bestätigungstaster der zugehörige virtuelle räumlicher Quader im Raum mittels Hand eine definierbare Zeit eingegriffen wird, so wird die zugeordnete Aktion im Fertigungssystem ausgelöst.

In einer weiteren Ausgestaltung der Erfindung umfasst die Sensoranordnung alternativ oder zusätzlich zur Tiefenkamera ein RGB-Kamerasystem und/oder weitere Mittel zur digitalen Bildverarbeitung zum automatischen Erkennen der Konfiguration. Darüber hinaus können zusätzliche Prozesse/Funktionen der Bildverarbeitung und Bilderfassung zum Einsatz kommen. So kann bspw. die richtige Farbe, Art und Beschaffenheit der Montagekomponente oder Werkzeuges geprüft werden, was zu einer höheren Prozesssicherheit führt. Auch die Qualitätssicherung kann unterstützt werden, indem bspw. die Oberfläche auf schadhafte Stellen geprüft wird und/oder finale Montage mit einem im System hinterlegten Stand verglichen wird (z.b. ob die Komponente am richtigen Ort und/oder in der richtigen Ausrichtung montiert wurde, und/oder ob bei einem montierten Potentiometer der Einstellungswinkel des Potentiometers richtig ist). Beschriftungen wie bspw. Serialnummern, Artikelnummern können erkannt und ausgewertet werden. Ferner kann der Werker identifiziert werden, beispielsweise durch Gesichtserkennung oder andere biometrische Merkmale. Durch eine automatische Foto- und/oder Video-Erfassung können diese Schritte zusätzlich ohne weiteren Arbeitsaufwand dokumentiert werden. Diese Dokumentation kann später bei Beanstandungen, Recherchen und bei der Rückverfolgung verwendet werden.

Insbesondere können das Kamerasystem und die Mittel zur digitalen Bildverarbeitung dazu ausgelegt sein, aus von dem Kamerasystem erfassten Bilddaten Informationen über zumindest eine Aktivität des Werkers zu ermitteln, die zumindest eine Aktivität mit Hilfe der Information zu klassifizieren und wenigstens ein Steuersignal abhängig von der Klassifikation zu erzeugen.

Erfindungsgemäß ist die Steuerung dazu ausgelegt, die Erledigung des Fertigungsschritts zu detektieren, zu verbuchen und automatisch die Arbeitsanweisungen für den folgenden Fertigungsschritt anzuzeigen. Dadurch kann auf ein manuelles Umschalten bzw. Weiterblättern der Arbeitsanweisungen verzichtet werden, wodurch die Produktion beschleunigt und vereinfacht werden kann. Das Umschalten der Arbeitsanweisungen auf den folgenden Fertigungsschritt kann insbesondere auch berührungslos und völlig verschleißfrei erfolgen, so dass Schäden an der Hardware durch verschmutzte Finger oder Verschleiß vermieden werden können.

Die Vorteile der Erfindung kommen insbesondere bei komplexen Fertigungsschritten zum Tragen, in welchen der manuelle Fertigungsschritt mehrere Teilschritte umfasst, die jeweils einzeln überwacht werden. Dabei können beispielsweise die Teilschritte eines Fertigungsschritts wenigstens die Entnahme einer Komponente und die Montage dieser Komponente umfassen. Durch die Zusammenfassung dieser Teilschritte zu einer Einheit kann ein logischer Kontext hergestellt werden, der die beim Erkennen der Teilschritte anfallenden Aufgaben der Steuerung vereinfacht. Die Anzahl der innerhalb eines Fertigungsschritts sinnvollen und erwarteten Teilschritte ist sehr viel geringer als die Gesamtzahl der möglichen Aktivitäten des Werkers, was die Erkennung vereinfacht.

Die erfolgreiche Durchführung von Teilschritten kann von dem System insbesondere mit Hilfe von sogenannten Quittierungsbedingungen erkannt werden. Mögliche Quittierungsbedingungen sind:
- ein bestimmtes Ziel-Bild bezogen auf die jeweilige Montageposition auf dem Werkstück (hierbei werden z.B. Kontur, Position, Farbe, Ausrichtung der montierten Komponente ausgewertet);
- Komponenten Entnahme aus richtigen Behälter;
- Einsatz des richtigen Werkzeug;
- Werker-Bewegung zur Montage (Eingriff in Bereich);
- Erkennung Farbe / Barcode (bspw. QR-Code), ... der verwendeten Werkstückträger;
- Erkennung Farbe / Barcode (bspw. QR-Code), ... der verwendeten Werkstücke;
- Erkennung Farbe / Barcode (bspw. QR-Code), ... der verwendeten Komponente;
- Keine Bewegung im definierten Bereich;
- Manuelle Quittierung durch Mitarbeiter (Virtueller Button / Geste (bspw. "Daumen hoch");

Im besonderen Fall kann es auch eine Kombination mehrerer obiger Quittierungsbedingungen für eine Quittierungserkennung ausgewertet werden.

In einer Ausgestaltung der Erfindung kann der Werker durch manuelles Weiterschalten jederzeit die automatischen Quittierungsbedingungen übersteuern und manuell zum nächsten Schritt wechseln. Auch ist der Wechsel zu den vorherigen oder zukünftigen Schritten per Geste (bspw. Wisch-Geste) möglich. Sondergesten für Sonderfunktionen wie z. B. Einblendung Detailzeichnung, CAD-Ansicht, Werkzeug einschalten, Prüfgerät einschalten, Prüf-Wert auslesen, Foto-Dokumentation oder Erfassen von Eigenschaften des Werkstücks oder der Komponente (z. B. Serial Nummer) können ebenfalls erfasst werden.

Der Erfinder schlägt ferner vor, dass die Teilschritte wenigstens die Erfassung von Produktionsdaten einer Komponente umfassen, insbesondere von Identifikationsdaten. Als Identifikationsdaten kommen insbesondere eine Produkt-Identifier wie beispielsweise eine Serial-Nummer, eine Beschriftung oder eine Chargennummer in Betracht. Die Erkennung kann über die Bildverarbeitung erfolgen, beispielsweise mit Hilfe von Strichcodes, AR-Markern oder QR-Codes oder Schrifterkennung, oder über andere Sensoren wie beispielsweise ein Lesegerät für RFID-Tags. Durch die Erfassung von Identifikationsdaten kann der Fertigungsprozess dokumentiert werden, eine Fehlersuche wird erleichtert und die Prozesssicherheit kann verbessert werden. Insbesondere können bei der Erkennung ungeeigneter Bauteile aufgrund der Identifikationsdaten über die graphische oder akustische Benutzerschnittstelle Warnsignale ausgegeben werden.

Die Detektion und Identifikation vom manuellen Fertigungsschritten kann vereinfacht und beschleunigt werden, wenn das System eine Datenbank umfasst, die mittels Bildverarbeitung erkennbare Merkmale bestimmten Konfigurations- oder Bewegungszuständen zuordnet. Das Auslösen des Prozesses der oben genannten Art kann dann in wohl definierter Weise durch das Erkennen eines Konfigurations- oder Bewegungszustands erfolgen.

In einer besonders benutzerfreundlichen Ausgestaltung der Erfindung umfassen die detektierten bzw. in der Datenbank gespeicherten die Konfigurations- oder Bewegungszustände eine oder mehrere Gesten des Werkers. Das System kann dann, beispielsweise basierend auf einem neuronalen Netzwerk, lernen, bestimmte Gesten des Werkers zu erkennen und zu interpretieren. Solche Gesten können Gesten mit den Händen wie beispielsweise "Daumen hoch", das Hochhalten einer bestimmten Anzahl von Fingern, ein Winken, eine Faust, Hochheben der flachen Hand oder mit der Hand auf den Tisch klopfen sein oder Gesten des Körpers, beispielsweise ein sich aufrichten, ein Strecken oder ein Beugen. Erkennt das System zum Beispiel ein neues Bildmuster, welches innerhalb eines bestimmten Toleranzbereichs zu bestehenden Bildmustern einer definierten Geste liegt, dann wird der Benutzer einmalig die Gleichheit zu bestätigen.

Erfolgt dies, so wird das neue Bildmuster zukünftig ebenfalls bei der Gestenerkennung für diese obige Geste berücksichtigt (automatisches Lernen).

Nach einer besonders intuitiven Variante dieser Ausführungsform kann ein nach-links oder nach-rechts schieben bzw. Winken mit der Hand einem Vor- oder Zurückblättern der Arbeitsanweisungen zugeordnet sein.

In einer besonders vorteilhaften Ausgestaltung der Erfindung verfügt die Steuerung über einen Teaching-Betriebsmodus, in welchem die Steuerung in einem bestimmten Konfigurations- oder Bewegungszustand von der Sensoranordnung erfasste Sensordaten analysiert und zum Erlernen der Erkennung des Konfigurations- oder Bewegungszustands nutzt. Der Werker oder eine repräsentierende Person führt zu einen bestimmten Fertigungsschritt, oder Teilschritt ein bestimmtes charakteristisches Bewegungsmuster oder eine bestimmte Geste mehrmals durch, bis das System charakteristische Merkmale des Schritts bzw. der Geste sicher erkennt und die dazugehörigen Bildinformationen in der Referenzdatenbank hinterlegt.

Ferner wird vorgeschlagen, dass die Objekte einen oder mehrere Werkstückträger umfassen und dass die Sensoranordnung Mittel zum Identifizieren des einen oder der mehreren Werkstückträger sowie zur Erkennung der Position des einen oder der mehreren Werkstückträger an dem Fertigungsarbeitsplatz umfasst. Dadurch können die Werkstückträger und deren Position sicher erkannt werden und der für die Erkennung der Gesten bzw. Teilschritte ausgewählte und überwachte räumliche Bereich kann entsprechend angepasst und verschoben werden. Das System kann eigenständig den eingesetzten Werkstückträger erkennen und prüfen, ob es sich dabei um dem vom System geforderten Werkstückträger handelt. Diese Erkennung kann beispielsweise über die Form, die Farbe und/oder andere Merkmale (Barcode (bspw. QR-Code), angebrachter Reflektor, angebrachten Marker (bspw. AR-Marker), Beschriftung, usw.) erfolgen. Darüber hinaus werden die Position und die Ausrichtung über die Kantenerkennung mittels Sensoreinheit überprüft.

Nach einer weiteren Ausgestaltung der Erfindung umfassen die Objekte im Normalfall ein oder im Sonderfall mehrere Werkstücke. Dabei ist es vorteilhaft, wenn die Sensoranordnung Mittel zum Identifizieren des einen oder der mehreren Werkstücke, sowie zur Erkennung der Position des einen oder der mehreren Werkstücke an dem Fertigungsarbeitsplatz umfasst. Dadurch können die Werkstücke und deren Position sicher erkannt werden und der für die Erkennung der Gesten bzw. Teilschritte ausgewählte und überwachte räumliche Bereich kann entsprechend angepasst und verschoben werden. Das System kann eigenständig das eingesetzte Werkstück erkennen und prüfen, ob es sich dabei um das vom System geforderte Werkstück handelt. Diese Erkennung kann beispielsweise über die Form, die Farbe und/oder andere Merkmale (Barcode (bspw. QR-Code), angebrachter Reflektor, abgebrachter Marker (bspw. AR-Marker), Beschriftung, usw.) erfolgen. Darüber hinaus werden die Position und die Ausrichtung geprüft.

Nach der Erfindung erkennt das System eigenständig das eingesetzte Werkzeug und prüft, ob es sich dabei um das vom System geforderte Werkzeug handelt. Diese Erkennung kann beispielsweise über die Form, die Farbe und/oder andere Merkmale (Barcode (bspw. QR-Code), angebrachter Reflektor, angebrachter Marker (bspw. AR-Marker), Beschriftung, usw.) erfolgen. Auch ist die Identifikation aufgrund deren ursprünglicher Lagerungsposition (Werkzeugwandhalter, Werkzeugfach, ...) möglich. Eine weitere Möglichkeit ist die Erkennung des Werkzeugs auf Grund der vom Werker eingenommenen Körperhaltung, bzw. seiner Bewegungen. Darüber hinaus werden die Position und die Ausrichtung geprüft. Die Erkennung des Werkzeugs kann neben der Erkennung über Bildverarbeitung auch über andere Wege erfolgen, insbesondere durch Detektion des Stromverbrauchs oder eine Datenverbindung zwischen Werkzeug und Steuerung.

Das System kann ferner eigenständig die eingesetzte Montage-Komponente erkennen und prüfen, ob es sich dabei um das vom System geforderte Komponente handelt. Diese Erkennung kann beispielsweise über die Form, die Farbe und/oder andere Merkmale (Barcode (bspw. QR-Code), angebrachter Reflektor, angebrachten Marker (bspw. AR-Marker), Beschriftung, usw.) erfolgen. Auch ist die Identifikation aufgrund deren ursprünglicher Lagerungsposition (Behälter, Sortierkasten-Fach, Wandregal, ...) möglich. Dafür wird der Greifvorgang des Mitarbeiters in die zugeordneten Lagerbehält mittels Sensoreinheit erkannt. Darüber hinaus werden die Position und die Ausrichtung geprüft wo die Komponente am Werkstück montiert wurde.

Das System kann eigenständig den Fortschritt des Montage-Vorgangs erkennen, indem es z. B. prüft, ob alle Montage-Komponenten angebracht wurden und ob die geforderte Bewegungsabfolge eingehalten wurde. So kann geprüft werden ob alle Schrauben komplett verschraubt wurden, oder ob eine Schraube vergessen oder nur unvollständig verschraubt wurde. Es können alle Kriterien geprüft werden, welche mit der gewonnen Bildinformationen und entsprechenden Bilderkennungs-Schritten detektierbar sind, wie z. B.: Vollständigkeit, Lage und Struktur einer Schweißnaht, Vollständigkeit, Lage und Struktur von Bohrungen etc.

Das System kann eigenständig Arbeitsschritte eines Werkers erkennen und deren korrekte Ausführung prüfen. Um dies gewährleisten zu können, wird fortlaufend der Arbeitsvorgang durch die Sensoren erfasst. Muss das Werkstück beispielsweise gereinigt / geschliffen / lackiert werden, kann das System prüfen, ob alle Bereiche vollständig bearbeitet wurden oder kann die noch zu bearbeitenden Bereiche visualisieren bzw. die Quittierung des Arbeitsschritts nicht freigeben. Im Umkehrschluss kann ein Werker auch gewarnt werden, wenn er zu lange in einen Bereich verbleibt, bzw. wenn Bereiche bearbeitet werden, welche nicht im aktuellen Schritt bearbeitet werden dürfen. Diese Warnungen können sowohl akustisch mittels eines Warntons als auch visuell am Arbeitsplatz-Dialog angezeigt werden. Ist der Arbeitsschritt erfolgreich absolviert, schaltet das System automatisch und ohne Zutun des Werks zum nächsten Arbeitsschritt weiter.

In einer besonders vorteilhaften Ausgestaltung der Erfindung werden dem Werker automatisch spezifische Arbeitsanweisungen für Mangelbehebung eingeblendet, falls wiederkehrende Montage- oder Bearbeitungsfehler durch Bilderkennung erkannt werden.

Abhängig von der aktuell erkannten Situation am Arbeitsplatz können weitere Eingriffe in die Arbeitsplatz- und/oder Werkzeugsteuerung vorgesehen sein. Zum Beispiel kann die Arbeitsplatzbeleuchtung verändert werden, wenn es zu Blendungen mit stark reflektierenden Materialen kommt, bzw. wenn eine zu geringe Ausleuchtung erkannt wird. Außerdem können die Werkzeugparameter automatisch ermittelt werden, oder teilautomatisch, d.h. dem Werker vorgeschlagen werden. Auch die Kombination der gewonnenen Informationen mit Daten weiterer Sensoren (bspw. Temperatur-Sensor, Erschütterungs-Sensor, ...) ist möglich.

Ein weiterer Aspekt der Erfindung betrifft ein Verfahren zum Fertigen eines Produkts oder Teilprodukts, das wenigstens einen durch einen Werker durchgeführten manuellen Fertigungsschritt umfasst. Es wird vorgeschlagen, dass ein manueller Fertigungsschritt an einem Fertigungsarbeitsplatz mit einem Überwachungs- und Bediensystem der oben beschriebenen Art durchgeführt wird.

Weitere Merkmale und Vorteile ergeben sich aus der folgenden Figurenbeschreibung. Die gesamte Beschreibung, die Ansprüche und die Figuren offenbaren Merkmale der Erfindung in speziellen Ausführungsbeispielen und Kombinationen. Der Fachmann wird die Merkmale auch einzeln betrachten und zu weiteren Kombinationen oder Unterkombinationen zusammenfassen, um die Erfindung, wie sie in den Ansprüchen definiert ist, an seine Bedürfnisse oder an spezielle Anwendungsbereiche anzupassen.
- Fig. 1: zeigt schematisch einen Fertigungsarbeitsplatz mit einem erfindungsgemäßen Überwachungs- und Bediensystem in einer Draufsicht;

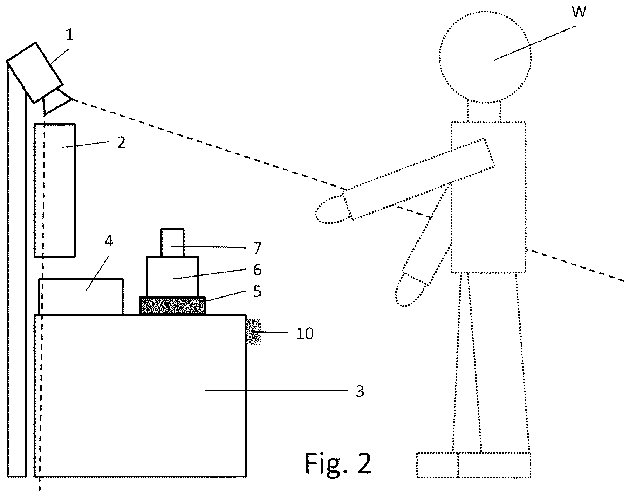

- Fig. 2: zeigt den Fertigungsarbeitsplatz aus Fig. 1 in einer Seitenansicht;
- Fig. 3: illustriert schematisch die Überwachung eines Behälters durch ein erfindungsgemäßes Überwachungs- und Bediensystem;
- Fig. 4: illustriert die Überwachung eines Behälters auf einem Fertigungsarbeitsplatz;
- Fig. 5: zeigt einen Behälterstellplatz am Fertigungsarbeitsplatz bestückt mit unterschiedlichen Behältergrößen;
- Fig. 6: illustriert schematisch einen Fertigungsarbeitsplatz mit Virtuellen Bestätigungstaster zum Auslösen von Aktionen, bspw. Quittierung des Arbeitsschrittes. Zusätzlich enthalten sind Behälter, welche eingriffsüberwacht sind;
- Fig. 7: illustriert die Funktionsweise einer Virtuellen Bestätigungstaster;
- Fig. 8a-Fig. 8c: illustrieren schematisch verschiedene von dem erfindungsgemäßen Überwachungs- und Bediensystem erkannte Gesten eines Werkers, wobei grauen Linien die bei dem Gesten-Vergleich verwendete Toleranzen symbolisieren, welche konfigurierbar ist;
- Fig. 9: zeigt die beispielsweise Anbringung eines maschinenlesbaren Mittels für die Identifikation eines Werkstücks; und
- Fig. 10: zeigt die Funktionsweise der Erkennung der Montagepositionen am Werkstück;
- Fig. 11: zeigt den Ablauf eines Montagevorgangs. In diesem wird geprüft, ob die Komponente richtig montiert wurde; und
- Fig. 12: symbolisiert einen wiederholten Bewegungsablauf einer Hand, welcher beispielsweise als eine "Polieren"-Tätigkeit erkannt werden kann, wobei zur Erkennung eine Dauer oder eine Anzahl Wiederholungen hinterlegt werden kann.

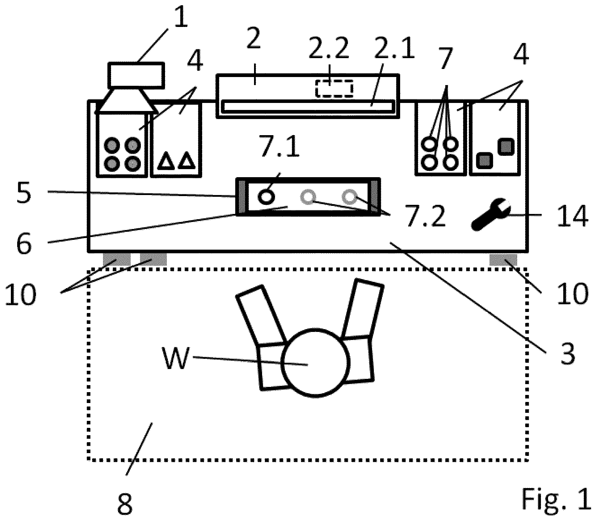

Fig. 1 zeigt einen Fertigungsarbeitsplatz 3 in einer Draufsicht. Ein Steuersystem umfasst eine als Computer ausgebildete Steuerung 2. Das Steuersystem umfasst ferner eine Sensoranordnung zum Überwachen eines von einem Werker W durchgeführten Fertigungsvorgangs. Neben der Überwachung der Arbeitsabfolge des Werkers W kann dieser durch Gesten auch aktiv Einfluss auf den Ablauf nehmen.

Im Blickfeld des Werkers ist eine als Bildschirm 2.1 ausgestaltete graphische und akustische Benutzerschnittstelle zur Darstellung eines Arbeitsplatzdialogs für den Fertigungsschritt angeordnet.

Das in Fig. 1 dargestellte System zum Betreiben, Überwachen und Steuern eines Fertigungsvorgangs an einem Fertigungsarbeitsplatz 3 verwendet eine als wenigstens eine TOF-Kamera 1 ausgestaltete Sensoranordnung. Die aktuelle Situation am Fertigungsarbeitsplatz 3 wird mit Hilfe des Kamerasystems 1 erfasst, analysiert und gesteuert. Die Analyse durch die Steuereinheit 2 umfasst das Ermitteln von Informationen über zumindest eine Aktivität des Werkers W aus dem vom Kamerasystem 1 erfassten Bilddaten, das Klassifizieren der Aktivität mit Hilfe der Information aus einer angeschlossenem Datenbank 2.2 und das Erzeugen wenigstens eines Steuersignals abhängig von der Klassifikation. Aufgrund dieser Analyse können beispielsweise Fehler erkannt und dem Werker W signalisiert werden. Positiv erkannte Montage, Bewegungen und/oder Entnahmen (bspw. von Montagekomponenten 7) führen zur automatischen Quittierung des aktuellen Arbeitsschritts. Bei wiederkehrenden Montagefehlern, werden automatisch Behebungshinweise eingeblendet. Durch Gestenerkennung kann der Werker W zusätzlich aktiv auf den Ablauf Einfluss nehmen, um bespielweise einen Schritt gezielt zu quittieren, eine Mindermenge anzuzeigen, spezifische Arbeitsanweisungen auf dem Bildschirm 2.1. einzublenden oder andere vorab definierte Funktionen oder Prozesse auszulösen.

Im Blickfeld einer auf einen Fertigungsarbeitsplatz 3 gerichteten Kamera 1 gibt es vielfältige, mit einfachen Mitteln der Bildverarbeitung erkennbare Referenzpunkte wie Kanten und dergleichen und der Bildhintergrund ist relativ statisch, so dass die Silhouette des Werkers W einfach ermittelt werden kann.

Das Kamerasystem 1 wird am Fertigungsarbeitsplatz 3 angebracht und mit einer Steuereinheit 2 verbunden. Das von dem Kamerasystem 1 erfasste Bildmaterial wird von der Steuereinheit 2 lokal bildweise ausgewertet und kann danach verworfen werden.

In dem von dem Kamerasystem 1 erfassten Bereich erkennt die Steuereinheit 2 mit Hilfe der digitalen Auswertung des Bildmaterials u. A. die Eingriffe in die Behälter 4, die Gesten des Werkes, sowieso die Verwendung der Virtuellen Bestätigungstaster 10 und der Montageposition 9.2 der montierten Komponente am Werkstück 6. Wenn ein größerer oder zusätzlicher Bereich überwacht werden soll, können dort weitere Kamerasysteme 1 montiert und mit der Steuereinheit 2 verbunden werden.

Die räumlichen Positionen des Werkstücks 6 sowie bspw. der Werkzeuge 14 oder der Behälter 4 und die entsprechenden Ausschnitte des Blickfelds des Kamerasystems 1 werden erfindungsgemäß mit Hilfe der Bildverarbeitungssoftware von der Steuereinheit 2 erkannt und der Überwachung zugrunde gelegt. Die Gesamtheit dieser Positionen und Koordinaten werden hier und im Folgenden als Konfiguration bezeichnet. Diese Konfiguration legt fest, wo sich die zu überwachenden Bereiche befinden. Diese Bereiche müssen vollständig durch das Kamerasystem 1 erfassbar sein, d. h. im Blickfeld von zumindest einer der Kameras liegen.

Durch Änderung der Koordinaten der überwachten Bereiche kann das System ohne Änderungen am physischen Aufbau des Arbeitsplatzes flexibel konfiguriert werden. Änderungen der Anzahl und/oder Position der Behälter 4, sowie dem Werkstück 6 (bzw. dem Werkstückträger 5) oder/oder der Werkzeuge 14 können an die spezifischen Anforderungen des aktuellen Fertigungsauftrags angepasst werden. Gleiches gilt für die Virtuellen Bestätigungstaster 10, welche situationsabhängig positioniert, aktiviert und unterschiedliche Aktionen auslösen können. Auch eine Positionierung abhängig von dem aktuellen Benutzer ist möglich. Dies verbessert die Ergonomie des Arbeitsplatzes da die Bedienelemente bspw. an die Körpergröße des Werkers W angepasst werden können.

Ferner wird eine automatische Identifikation und/oder Definition der zugeordneten Funktion des virtuellen Buttons entweder über die Position des virtuellen Buttons oder des durch Bilderkennung erkannten Symbols oder QR-Codes auf der "Virtuellen Schaltfläche".

Die Position der "virtuellen Buttons" kann einfach Magnethaftung oder ähnliches verändert werden.

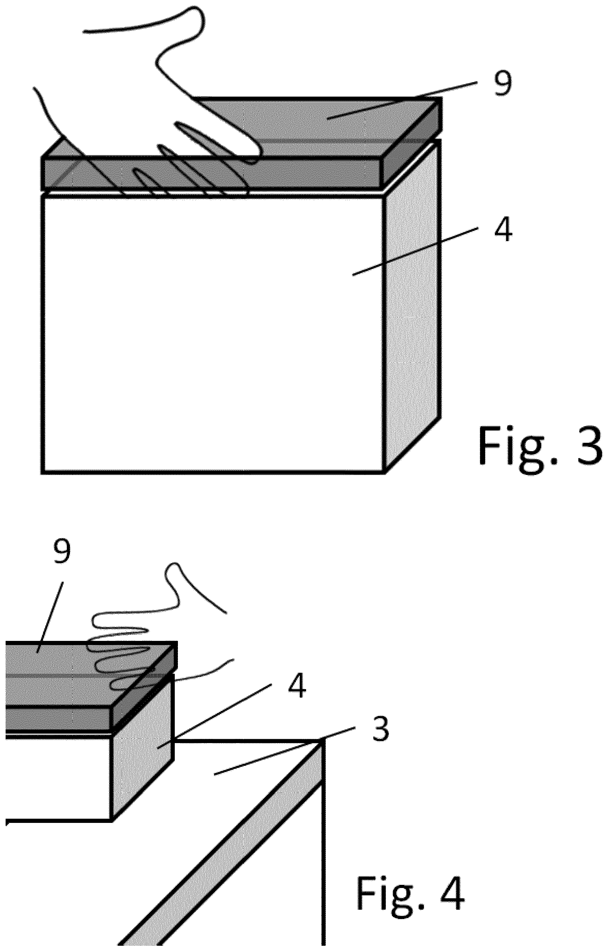

Fig. 3, Fig. 4, Fig. 7 und Fig. 10 zeigen überwachte Bereiche 9 oberhalb eines Behälters 4, bzw. bei den Virtuellen Bestätigungstaster 10 vor einem mit einem Aufkleber markierten Bereich 11. Anstelle des Aufklebers kann auch ein lösbar befestigbares Plättchen oder anders Objekt kann zur Sichtbarmachung des virtuellen Bestätigungstasters genutzt werden. Das Plättchen kann magnetisch, mit Klettverschluss, mit Halterungen oder anderen Strukturen in der vom Benutzer gewünschten Position am Fertigungsarbeitsplatz befestigt werden.

Sobald sich nun ein Gegenstand (z. B. die Hand des Werkers W) in einen aktiv überwachten Bereich 9 bewegt, wird dies von der Steuerungssoftware erkannt und situationsabhängig darauf reagiert, indem ein geeignetes Steuersignal erzeugt wird. Je nachdem welcher aktive Bereich 9 betroffen ist, wird das Ereignis von der Steuereinheit als Aktivität des Werkers erkannt und klassifiziert. Wird ein Eingriff zu diesem Zeitpunkt und in diesem Bereich nicht erwartet, bzw. ist dieser als Fehler zu werten, wird diese Fehlersituation durch die Steuerungssoftware erkannt und weiterverarbeitet. Diese Eingriffskontrolle kann sowohl für Behälter 4 als auch für Bereiche am Werkstück 6 (Montagepositionen 9.2) aktiviert werden und beugt so einer Fehlmontage bzw. einer Fehlentnahme vor. Abhängig von der Klassifikation erzeugt die Steuereinheit ein Steuersignal, durch welches dann ein Feedbacksignal für den Werker W erzeugt wird oder das wie eine Benutzereingabe weiterverarbeitet wird, indem beispielsweise zum nächsten Arbeitsschritt gewechselt wird.

Bei Montageprozessen kann zusätzlich die Dauer des Eingriffs in den überwachten Bereich und die Vorher- und Nachher-Situation ausgewertet werden.

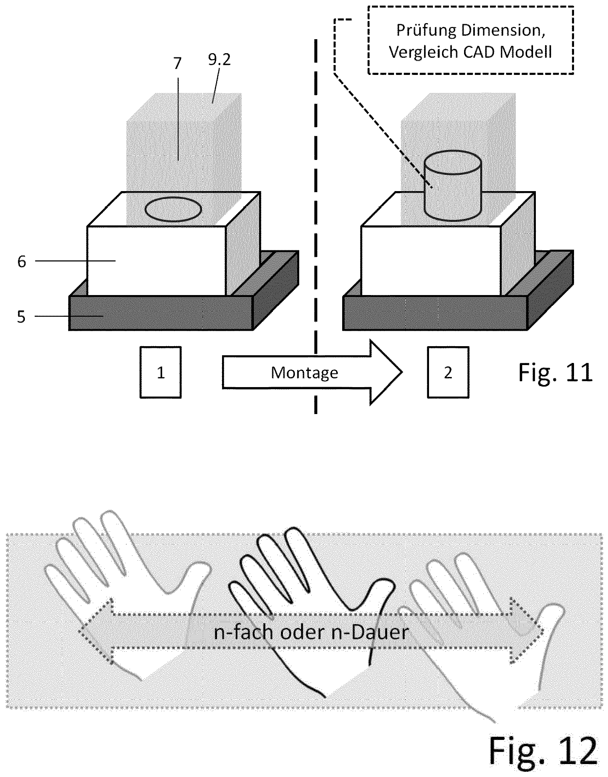

Ferner kann geprüft werden, ob nach dem Eingriff die zu montierende Komponente in der in den Produktdaten hinterlegten Dimension abzüglich definierter Toleranzen an der Montagepositionen durch die Sensoreinheit in der entsprechenden Dimension an der Position erkannt wird. Mögliche Verfahren sind bspw. Kantenerkennung in Kombination mit der Auswertung der Raumkoordinaten der Sensoreinheit, ein Soll- Ist-Bildvergleich, oder ähnliche Verfahren. Siehe dazu auch Fig. 11.

Einzelne Arbeitsschritte werden durch die Steuerungssoftware damit erkannt und standardmäßig automatisch beim richtigen Montieren der Komponente an das Werkstück quittiert. Für eine manuelle Quittierung führt der Werker eine festgelegte Geste aus, welche durch das System erkannt wird. Alternativ dazu kann der Werker den Schritt auch mit einer dafür definierte virtuellen Bestätigungstaster 10 quittieren. Durch unterschiedliche Gesten bzw. virtuelle Bestätigungstaster 10 kann der Werker W so aktiv Einfluss auf den Fertigungs-Ablauf nehmen. Zum Beispiel ist das Auslösen eines Sonderprozess, bspw. das Melden eines Qualitätsfehlers möglich. Die Gestenerkennung ermöglicht darüber hinaus, dass der Werker W nicht in den Bedienbereich des Montage-Bildschirmdialogs zurückzukehren muss (bspw. Touch-Screen, Maus/Tastatur). Der Werker W kann in seinem aktuellen Arbeitsbereich 8 verbleiben, wodurch seine Laufwege minimiert werden und der gesamte Vorgang beschleunigt wird.

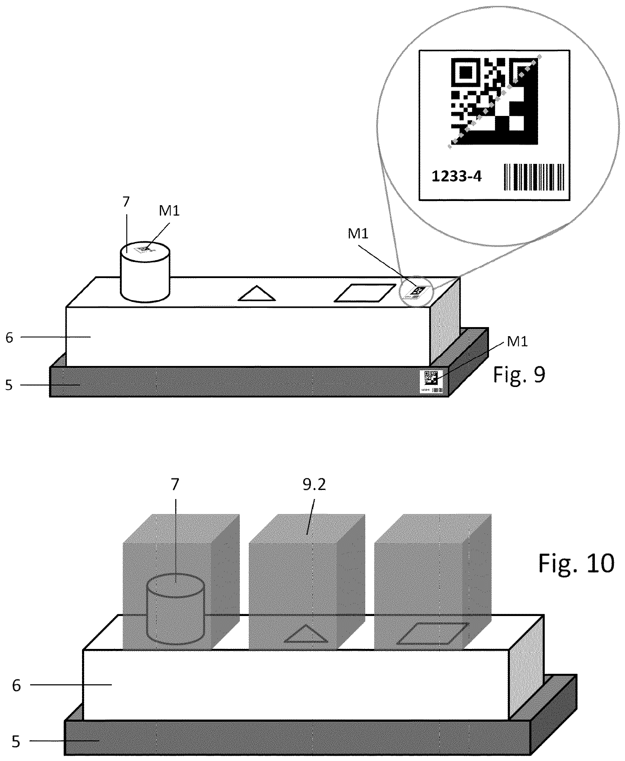

Zur Identifikation des aktuellen Werkstücks 6 erfasst das Kamerasystem 1 einen optischen Marker M1 (z. B. QR-Code, AR-Code, Barcode) der z. B. an der oberen Seite des Werkstücks 6 angebracht ist. Dieser beinhaltet die erkannte ID, die die Steuerung 2 nutzen kann (siehe dazu Fig. 9). Der optische Marker ist ein Mittel zum Identifizieren des Werkstücks und gegebenenfalls der Positionierung und Ausrichtung.

Alternativ, oder falls die automatische Identifikation versagt, kann die ID auch manuell in einem Arbeitsplatzdialog erfasst werden. Im Steuersystem 2 wird die Konfiguration für den Fertigungsarbeitsplatz 3 und das entsprechende Werkstück 6 geladen. Das Werkstück 6 muss dazu in einen Werkstückträger 5 gesteckt werden, um eine effiziente Erkennung mittels Kamerasystem 1 zu ermöglichen, da dafür beispielsweise eine definierte Ausrichtung und/oder Position des Werkstücks 6 vorausgesetzt wird.

Die Behälterplatzaufteilung des Arbeitsplatzes ist in einer Konfiguration hinterlegt. Diese Konfiguration erlaubt es, abhängig vom Arbeitsplatz die tatsächliche Größe und Position der einzelnen Behälterplätze zu ermitteln, so dass zum Überwachen einer von einem Werker durchgeführten Entnahme aus einem Behälter die konkreten Plätze mit Hilfe des Kamerasystems 1 erkannt und ausgewertet werden können.

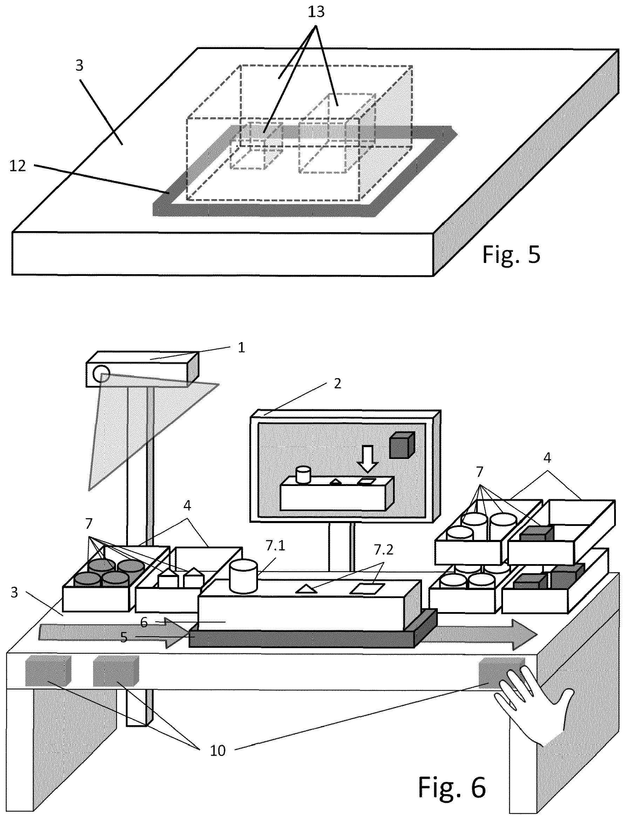

In der Regel muss der Arbeitsplatz anfangs für einen Fertigungsauftrag gerüstet werden, d. h. die Behälter mit den benötigten Montagekomponenten 7 müssen beschafft werden und ggf. muss der Werkstückträger 5 ausgetauscht oder um montiert werden. Diese Schritte werden ebenfalls durch das System unterstützt, indem geprüft wird, ob die richtigen Behälter 4 an den richtigen Plätzen aufgestellt worden sind. Ferner werden auch der Typ und die Ausrichtung des Werkstückträgers 5 überprüft. Um die Behälter zuverlässig zu positionieren, können Fachmarkierungen und/oder Fachabgrenzungen 12 am Arbeitsplatz angebracht werden, wie dies in Fig. 5 dargestellt ist. Weiter können Behältertypen und deren Abmessungen in der Konfiguration hinterlegt werden, so dass im nachfolgenden Prozess auch Eingriffe in die positionierten Behälter korrekt erkannt werden können. Mit Hilfe des Kamerasystems 1 kann auch die Position kleinerer Zielbehälter innerhalb eines Stellplatzes erfasst werden, wie dies in Fig. 5 durch einen Behälterplatz mit Behältern in unterschiedlichen Behältergrößen illustriert ist.

Sofern die Behälter 4 nicht mit dem Stellplatz verknüpft sind (z. B. Stammdaten oder Positionierung in vorhergehendem Prozess), können diese dynamisch durch den Benutzer positioniert werden. Der Benutzer wird im Dialog aufgefordert, Werkstückträger, Werkstücke, Werkzeuge und/oder Behälter 14 auf den Fertigungsarbeitsplatz aufzustellen. Je nach Prozess kann die Steuerung 2 dabei einen Stellplatz 12 und z. B. einen Behälter 4 vorgeben, oder der Benutzer entscheidet selbst über den verwendeten Behälter sowie über die Wahl des Stellplatzes 12.

Durch Eingabe (z. B. durch Scan) der Behälter-ID (z. B. Barcode, o. Ä.) nach dem Positionieren in einem leeren Stellplatz 12 wird der neue Behälter 4 im Steuerungs- und Überwachungssystem mit dem Stellplatz 12 verknüpft. Das Kamerasystem 1 erkennt dabei automatisch den Platz 12 in dem der neue Behälter 4 aufgestellt wurde. Alternativ kann diese Zuordnung des Behälters 4 zu einem Stellplatz 12 auch manuell mit Hilfe des Arbeitsplatzdialogs erfolgen.

Im Arbeitsplatzdialog werden einer oder mehrere gültige Behälter 4 für den aktuellen Arbeitsschritt angezeigt. Im Falle einer Mehrfachentnahme ist es beispielsweise möglich, dass mehrere oder sogar alle Montagepositionen 9.2 am Werkstück ein gültiges Ziel darstellen. Ein Fehleingriff in einen zu diesem Zeitpunkt nicht erlaubten Behälter 4 oder Montageposition 9.2 wird durch ein Fehlersignal angezeigt. Die korrekte Entnahme aus einem Behälter 4 wird mit Hilfe des Kamerasystems 1 durch die Steuerung 2 erkannt und ggf. automatisch verbucht.

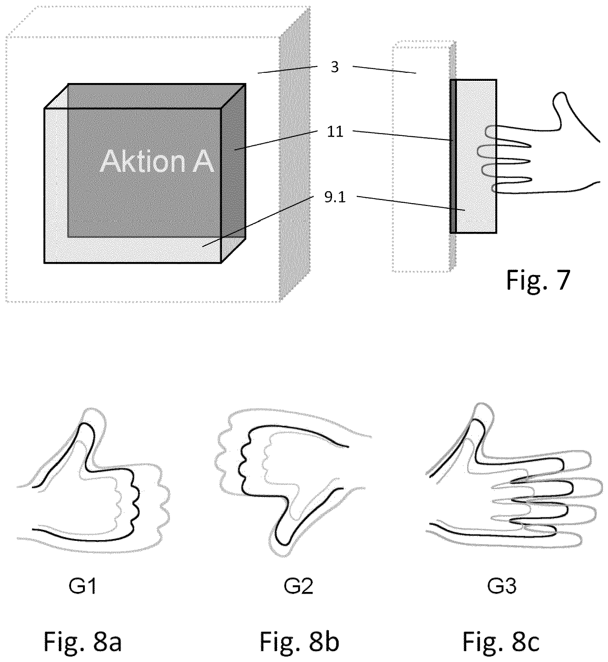

In den Fig. 8a - Fig. 8c sind Beispiele für Gesten dargestellt. Ein Beispiel für eine einfache Geste ist die ausgestreckte Hand mit nach oben zeigendem Daumen, wie sie in Fig. 8a gezeigt wird. Dabei wird das Bild des Kamerasystems 1 analysiert, das Bild der Hand des Werkers extrahiert und durch die Steuerungssoftware geprüft, ob das entsprechende Muster darin enthalten ist. Dieses Verfahren lässt sich auch mit anderen Gesten betreiben, wie sie beispielsweise in Fig. 8b und Fig. 8c dargestellt sind. Um eine effiziente Gestenerkennung zu ermöglichen, kann der Bereich, in welchem auf Gesten geprüft wird, räumlich oder zeitlich eingeschränkt werden (z. B. abhängig vom aktuellen Arbeitsauftrag). Die Position an welcher eine Geste erkannt wurde, ist im Steuersystem bekannt und kann in der Folgeaktion verwendet werden (z. B. Quittierung des Arbeitsschritts an der erkannten Gestenposition, falls mehrere Werkstücke und/oder Montagepositionen 9.2 gleichzeitig bearbeitet werden).

Optional kann in der Software eine Zeit vorgegeben sein oder einstellbar sein, die angibt, wie lange die Geste vom Mitarbeiter mindestens gehalten werden muss, damit diese als gültig erkannt wird. Dadurch können Fehlerkennungen verhindert werden. Erfolgreich erkannte Gesten lösen zugeordnete Aktionen im Steuersystem aus (z. B. Quittierung eines Arbeitsschritts). Weitere Gesten können dem System angelernt und mit Aktionen verknüpft werden.

Ergänzend oder alternativ zu der Gestenerkennung sind für die Benutzerinteraktion Virtuelle Bestätigungstaster 10 konfiguriert, wie sie in Fig. 7 dargestellt sind. Dazu werden aktive Bereiche 9.1 im Raum definiert, an denen es keine echten physischen Tasten / Schalter gibt. Das Steuersystem erkennt Eingriffe in diese aktiven Bereiche 9.1 und kann definierte Aktionen auslösen (z. B. Quittierung eines Montageschritts). Diese Bereiche können am physischen Aufbau z. B. durch eine Beschriftung 11 gekennzeichnet werden, damit sie leichter durch den Werker W zu finden sind. Die Virtuellen Bestätigungstaster 10 können in ihrer Position und Größe variiert werden - ebenso die mit dem Auslösen verbundenen Aktionen. Durch Bilderkennung der Symbole oder QR-Code auf den virtuellen Betätigungsflächen werden vom System automatisch erkannt, welche Funktion vom System ausgelöst werden soll. Somit kann der Werker die Buttons für sich selbst ergonomisch anordnen. Auch sind unterschiedliche Aktionen abhängig vom aktuellen Auftragsstatus möglich.

Die Quittierung der Montagekomponenten-Montage kann sowohl durch automatische Quittierung bei Erkennung der Montage am Werkstück, als auch mit Hilfe einer Virtuellen Bestätigungstaster 10 oder durch die Verwendung von Gesten, z. B. Daumen nach oben G1 in einem definierten Bereich erfolgen. Die Geste kann mit Hilfe des Kamerasystems 1 und einer durch geeignete Mittel zur digitalen Bildverarbeitung implementierte Gestenerkennung erkannt und interpretiert werden. Dazu werden aus den von dem Kamerasystem 1 erfassten Bilddaten Informationen über zumindest eine Aktivität des Werkers W ermittelt. Die Aktivität wird mit Hilfe der Information aus dem angeschlossenen System klassifiziert und wenigstens ein Steuersignal (bspw. Quittierung) wird abhängig von der ermittelten Klassifikation erzeugt.

In einer weiteren Ausgestaltung der Erfindung können die Werkstückträger 5, Werkstücke 6, Werkzeuge 14 und/oder Behälter 4 in einem Regal und/oder Stellfläche neben dem eigentlichen Arbeitstisch positioniert sein. Hier wird bspw. die Entnahme, also der Eingriff in die Behälter in dem Regal und/oder der Stellfläche überwacht, und das Erkennen der Konfiguration erfolgt analog zur oben beschriebenen Erkennung.

## Patentansprüche

1. Überwachungs- und Bediensystem für einen Fertigungsarbeitsplatz (3) für wenigstens einen Werker (W) zur Durchführung wenigstens eines manuellen Fertigungsschritts, wobei der Fertigungsarbeitsplatz (3) mehrere Objekte in einem veränderbaren Konfigurations- oder Bewegungszustand umfasst, wobei das System eine Steuerung (2) mit einer graphischen oder akustischen Benutzerschnittstelle (2.1) zur Darstellung eines Arbeitsplatzdialogs für den Fertigungsschritt und eine Sensoranordnung zum Überwachen eines von dem wenigstens einen Werker (W) durchgeführten Fertigungsschritts umfasst,
**dadurch gekennzeichnet, dass** die Sensoranordnung wenigstens eine Kamera (1) umfasst und die Steuerung (2) dazu ausgelegt ist, abhängig von den von der Kamera (1) erfassten Bilddaten zumindest die Erledigung des Fertigungsschritts zu detektieren, zu verbuchen, automatisch die Arbeitsanweisungen für den folgenden Fertigungsschritt anzuzeigen und eigenständig das eingesetzte Werkzeug erkennen und zu prüfen, ob es sich dabei um das vom System geforderte Werkzeug handelt.

2. Überwachungs- und Bediensystem für einen Fertigungsarbeitsplatz nach Anspruch 1,
**dadurch gekennzeichnet, dass** die Kamera (1) als Tiefenkamera ausgestaltet ist.

3. Überwachungs- und Bediensystem nach einem der vorhergehenden Ansprüche,
**dadurch gekennzeichnet, dass** der manuelle Fertigungsschritt mehrere Teilschritte umfasst, die jeweils einzeln überwacht werden, wobei die Teilschritte eines Fertigungsschritts wenigstens die Entnahme einer Komponente, die Montage dieser Komponente und/oder die Erfassung von Produktionsdaten, insbesondere Identifikationsdaten, dieser Komponente umfassen.

4. Überwachungs- und Bediensystem nach einem der vorhergehenden Ansprüche,
**gekennzeichnet durch** eine Datenbank (2.2), die mittels Bildverarbeitung erkennbare Merkmale bestimmten Konfigurations- oder Bewegungszuständen, insbesondere Gesten des Werkers (W), zuordnet.

5. Überwachungs- und Bediensystem nach einem der vorhergehenden Ansprüche,
**dadurch gekennzeichnet, dass** die Steuerung (2) über einen Teaching-Betriebsmodus verfügt, in welchem die Steuerung (2) in einem bestimmten Konfigurations- oder Bewegungszustand von der Sensoranordnung erfasste Sensordaten analysiert und zum Erlernen der Erkennung des Konfigurations- oder Bewegungszustands nutzt.

6. Überwachungs- und Bediensystem nach einem der vorhergehenden Ansprüche
**dadurch gekennzeichnet, dass** die Objekte einen oder mehrere Werkstückträger und/oder Werkstücke umfassen und dass die Sensoranordnung Mittel zum Identifizieren des einen oder der mehreren Werkstückträger und/oder Werkstücke, sowie zur Erkennung der Position des einen oder der mehreren Werkstückträger und/oder Werkstücke an dem Fertigungsarbeitsplatz (3) umfasst.

7. Überwachungs- und Bediensystem nach einem der vorhergehenden Ansprüche,
**dadurch gekennzeichnet, dass** der Fertigungsarbeitsplatz (3) wenigstens einen Stellplatz für wenigstens einen Behälter umfasst und die Sensoranordnung Mittel zum Identifizieren des wenigstens einen Behälters und/oder zum Detektieren eines Eingriffs des Werkers (W) in den Behälter umfasst.

8. Überwachungs- und Bediensystem nach einem der vorhergehenden Ansprüche,
**dadurch gekennzeichnet, dass** am Fertigungsarbeitsplatz eine von der Steuerung (2) steuerbare Fördertechnik umfasst und der Prozess das Auslösen eines Steuersignals für die Fördertechnik zur Anforderung oder dem Abtransport von Behältern oder Werkstücken umfasst.

9. Überwachungs- und Bediensystem nach einem der vorhergehenden Ansprüche,
**dadurch gekennzeichnet, dass** die Steuerung (2) dazu ausgelegt ist, aus den Bilddaten eine Dauer einer Fertigungstätigkeit des Werkers (W) und/oder eine Anzahl von vollständigen, wiederholten Bewegungsabläufen des Werkers zu erfassen, mit vorgegebenen Extremwerten zu vergleichen und bei Überschreitung ein Steuersignal ausgegeben.

10. Überwachungs- und Bediensystem nach einem der vorhergehenden Ansprüche,
**dadurch gekennzeichnet, dass** die Steuerung (2) dazu ausgelegt ist, den Werker (W) zu identifizieren und die erfassten Bilddaten gemäß für den Werker individualisierbaren Vorgaben auszuwerten.

11. Überwachungs- und Bediensystem nach einem der vorhergehenden Ansprüche,
**dadurch gekennzeichnet, dass** die Steuerung (2) dazu ausgelegt ist, die Bilddaten bekannten Bildmustern zuzuordnen und dann, wenn die erfassten Bilddaten eine Ähnlichkeit mit einem bekannten Bildmuster haben, die innerhalb eines vorgegebenen Toleranzbereich liegt, Werker aufzufordern, eine Zuordnung zu dem bekannten Bildmuster zu bestätigen und in nachfolgenden Vorgängen die Zuordnung automatisch vorzunehmen.

12. Überwachungs- und Bediensystem nach einem der vorhergehenden Ansprüche,
**dadurch gekennzeichnet, dass** die Steuerung (2) dazu ausgelegt ist, aus den Bilddaten Montage- oder Bearbeitungsfehler durch Bilderkennung zu erkennen und dem Werker automatisch spezifische Arbeitsanweisungen für Mangelbehebung einzublenden, falls ein bestimmter Montage- oder Bearbeitungsfehler wiederkehrend auftritt.

13. Überwachungs- und Bediensystem nach einem der vorhergehenden Ansprüche,
**dadurch gekennzeichnet, dass** die Steuerung (2) dazu ausgelegt ist, aus den Bilddaten den Eingriff des Werkers in einen als virtueller Bestätigungstaster definierten Bereichs zu erfassen und bei erfasstem Eingriff den Prozess auszulösen, wobei der Erfassungsbereich der virtuellen Bestätigungstaster am Fertigungsarbeitsplatz mit einer von der Kamera erfassbaren und vom Werker positionierbaren Markierung ausgestattet ist, die Steuerung (2) dazu ausgelegt ist, die Position der Markierung zu erfassen und den Erfassungsbereich der virtuellen Bestätigungstaster abhängig von der Position der erfassten Markierung zu definieren.

14. Überwachungs- und Bediensystem nach Anspruch 12,
**dadurch gekennzeichnet, dass** die Markierung aus den Bilddaten ablesbare Identifikationsinformation (wie z. B. AR-Marker, QR-Code, ...) aufweist und die Steuerung (2) dazu ausgelegt ist, den durch die virtuelle Bestätigungstaster auslösbaren Prozess abhängig von der Identifikationsinformation bestimmt.

15. Verfahren zum Fertigen eines Produkts oder Teilprodukts, das wenigstens einen durch einen Werker (W) durchgeführten manuellen Fertigungsschritt umfasst,
**dadurch gekennzeichnet, dass** der manuelle Fertigungsschritt an einem Fertigungsarbeitsplatz (3) mit einem Überwachungs- und Bediensystem nach einem der vorhergehenden Ansprüche durchgeführt wird.

## Claims

1. A monitoring and operating system for a manufacturing workplace (3) for at least one worker (W) for carrying out at least one manual production step, wherein the manufacturing workplace (3) comprises a plurality of objects in a changeable configuration or movement state, wherein the system comprises a control unit (2) with a graphic or acoustic user interface (2.1) for displaying a workplace dialogue for the production step and a sensor arrangement for monitoring a production step carried out by the at least one worker (W),
**characterised in that** the sensor arrangement comprises at least one camera (1) and the control unit (2) is designed to detect at least the completion of the production step, to register it, to automatically display the work instructions for the following production step and to independently recognise the tool used and to check whether it is the tool required by the system, depending on the image data detected by the camera (1).

2. Monitoring and operating system for a manufacturing workplace according to claim 1,
**characterised in that** the camera (1) is designed as a depth camera.

3. Monitoring and operating system according to one of the preceding claims,
**characterised in that** the manual production step comprises a plurality of sub-steps, which are each monitored individually, wherein the sub-steps of a production step comprise at least the removal of a component, the assembly of this component and/or the acquisition of production data, in particular identification data, of this component.

4. Monitoring and operating system according to one of the preceding claims,
**characterised by** a database (2.2) which, by means of image processing, assigns recognisable features to specific configuration or movement states, in particular gestures of the worker (W).

5. Monitoring and operating system according to one of the preceding claims,
**characterised in that** the control unit (2) has a teaching operating mode in which the control unit (2) analyses sensor data detected by the sensor arrangement in a specific configuration or movement state and uses it to learn how to recognise the configuration or movement state.

6. Monitoring and operating system according to one of the preceding claims,
**characterised in that** the objects comprise one or more workpiece carriers and/or workpieces and that the sensor arrangement comprises means for identifying the one or more workpiece carriers and/or workpieces, as well as for detecting the position of the one or more workpiece carriers and/or workpieces at the manufacturing workplace (3).

7. Monitoring and operating system according to one of the preceding claims,
**characterised in that** the manufacturing workplace (3) comprises at least one placement location for at least one container and the sensor arrangement comprises means for identifying the at least one container and/or for detecting of the worker (W) reaching into the container.

8. Monitoring and operating system according to one of the preceding claims,
**characterised in that** the manufacturing workplace includes a conveyor system that can be controlled by the control unit (2) and the process includes triggering a control signal for the conveyor system to request or remove containers or workpieces.

9. Monitoring and operating system according to one of the preceding claims,
**characterised in that** the control unit (2) is designed to detect a duration of a manufacturing activity of the worker (W) and/or a number of complete, repeated motion sequences of the worker from the image data, to compare it with predetermined extreme values and to output a control signal if it is exceeded.

10. Monitoring and operating system according to one of the preceding claims,
**characterised in that** the control unit (2) is designed to identify the worker (W) and to evaluate the acquired image data in accordance with specifications that can be individualised for the worker.

11. Monitoring and operating system according to one of the preceding claims,
**characterised in that** the control (2) is designed to assign the image data to known image patterns and, if the image data have a similarity with a known image pattern that lies within a predetermined tolerance range, to request workers to confirm an assignment to the known image pattern and to automatically carry out the assignment in subsequent operations.

12. Monitoring and operating system according to one of the preceding claims,
**characterised in that** the control unit (2) is designed to recognise assembly or processing errors by image recognition from the image data and to automatically display in specific work instructions for the worker for remedying the defect if a certain assembly or processing error occurs repeatedly.

13. Monitoring and operating system according to one of the preceding claims,
**characterised in that** the control unit (2) is designed to detect the worker reaching into an area defined as a virtual confirmation button from the image data and to trigger the process when the intervention is detected, wherein the detection range of the virtual confirmation button at the manufacturing workplace is equipped with a marking that can be detected by the camera and positioned by the worker, the control unit (2) is designed to detect the position of the marking and to define the detection range of the virtual confirmation button depending on the position of the detected marking.

14. Monitoring and operating system according to claim 12,
**characterised in that** the marking comprises identification information (such as AR marker, QR code, etc.) that can be read from the image data and the control unit (2) is designed to determine the process that can be triggered by the virtual confirmation button depending on the identification information.

15. A method for manufacturing a product or a subproduct, which includes at least one manual manufacturing step carried out by a worker (W),
**characterised in that** the manual manufacturing step is carried out at a manufacturing workplace (3) with a monitoring and operating system according to one of the preceding claims.

## Revendications

1. Système de surveillance et d'opération d'un poste de travail (3) pour au moins un ouvrier (W) chargé d'effectuer au moins une étape de production manuelle, dans lequel le poste de travail (3) comprend une pluralité d'objets dans une configuration ou un état de mouvement modifiable, dans lequel le système comprend une unité de commande (2) dotée d'une interface utilisateur graphique ou acoustique(2.1) pour afficher un dialogue de poste de travail pour l'étape de production et un dispositif de capteurs pour surveiller une étape de production effectuée par ledit au moins un ouvrier (W),
**caractérisé en ce que** le dispositif de capteurs comprend au moins une caméra (1) et que l'unité de commande (2) est conçue pour détecter au moins l'achèvement de l'étape de production, l'enregistrer, afficher automatiquement les instructions de travail pour l'étape de production suivante et reconnaître indépendamment l'outil utilisé et vérifier s'il s'agit de l'outil requis par le système, en fonction des données d'image détectées par la caméra (1).

2. Système de surveillance et d'opération d'un poste de travail de fabrication selon la revendication 1,
**caractérisé en ce que** la caméra (1) est conçue comme une caméra de profondeur.

3. Système de surveillance et d'opération selon l'une des revendications précédentes,
**caractérisé en ce que** l'étape de production manuelle comprend plusieurs sous-étapes qui sont surveillées individuellement, les sous-étapes d'une étape de production comprenant au moins le retrait d'un composant, l'assemblage de ce composant et/ou l'acquisition de données de production, en particulier de données d'identification, de ce composant.

4. Système de surveillance et d'opération selon l'une des revendications précédentes,
**caractérisé par** une base de données (2.2) qui, par traitement d'images, associe des caractéristiques reconnaissables à des états de configuration ou de mouvement spécifiques, en particulier des gestes de l'ouvrier (W).

5. Système de surveillance et d'opération selon l'une des revendications précédentes,
**caractérisé en ce que** l'unité de commande (2) a un mode de fonctionnement d'apprentissage dans lequel l'unité de commande (2) analyse les données de capteur détectées par l'arrangement de capteur dans une configuration ou un état de mouvement spécifique et les utilise pour apprendre à reconnaître la configuration ou l'état de mouvement.

6. Système de surveillance et d'opération selon l'une des revendications précédentes,
**caractérisé en ce que** les objets comprennent un ou plusieurs porte-pièces et/ou pièces à usiner et que le dispositif de capteurs comprend des moyens pour identifier le ou les porte-pièces et/ou pièces à usiner, ainsi que pour détecter la position du ou des porte-pièces et/ou pièces à usiner sur le lieu de fabrication (3).

7. Système de surveillance et d'opération selon l'une des revendications précédentes,
**caractérisé en ce que** le poste de travail (3) comprend au moins un emplacement pour au moins un conteneur et que le dispositif de capteurs comprend des moyens pour identifier au moins un conteneur et/ou pour détecter si l'ouvrier (W) met sa main dans le conteneur.

8. Système de surveillance et d'opération selon l'une des revendications précédentes,
**caractérisé en ce que** le poste de travail comprend un système de convoyage qui peut être contrôlé par l'unité de commande (2) et que le processus comprend le déclenchement d'un signal de commande pour le système de convoyage afin de demander ou de retirer des conteneurs ou des pièces à usiner.

9. Système de surveillance et d'opération selon l'une des revendications précédentes,
**caractérisé en ce que** l'unité de commande (2) est conçue pour détecter une durée d'activité de fabrication de l'ouvrier (W) et/ou un nombre de séquences de mouvement complètes et répétées de l'ouvrier à partir des données d'image, pour la comparer à des valeurs extrêmes prédéterminées et pour émettre un signal de commande si elle est dépassée.

10. Système de surveillance et d'opération selon l'une des revendications précédentes,
**caractérisé en ce que** l'unité de commande (2) est conçue pour identifier l'ouvrier (W) et pour évaluer les données d'image acquises conformément à des spécifications qui peuvent être individualisées pour l'ouvrier.

11. Système de surveillance et d'opération selon l'une des revendications précédentes,
**caractérisé en ce que** l'unité de commande (2) est conçue pour affecter les données d'image à des modèles d'image connus et, si les données d'image présentent une similitude avec un modèle d'image connu qui se situe dans une plage de tolérance prédéterminée, pour demander aux ouvriers de confirmer une affectation au modèle d'image connu et pour effectuer automatiquement l'affectation dans les opérations ultérieures.

12. Système de surveillance et d'opération selon l'une des revendications précédentes,
**caractérisé en ce que** l'unité de commande (2) est conçue pour reconnaître les erreurs d'assemblage ou de traitement par reconnaissance d'image à partir des données d'image et pour afficher automatiquement des instructions de travail spécifiques à l'intention de l'ouvrier afin de remédier au défaut si une certaine erreur d'assemblage ou de traitement se produit de manière répétée.

13. Système de surveillance et d'opération selon l'une des revendications précédentes,
**caractérisé en ce que** l'unité de commande (2) est conçue pour détecter l'intrusion de l'ouvrier dans une zone définie comme un bouton de confirmation virtuel à partir des données d'image et pour déclencher le processus lorsque l'intrusion est détectée, la zone de détection du bouton de confirmation virtuel sur le lieu de fabrication étant équipée d'un marquage qui peut être détecté par la caméra et positionné par l'ouvrier, l'unité de commande (2) est conçue pour détecter la position du marquage et pour définir la zone de détection du bouton de confirmation virtuel en fonction de la position du marquage détecté.

14. Système de surveillance et d'opération selon la revendication 12,
**caractérisé en ce que** le marquage comprend des informations d'identification (telles qu'un marqueur AR, un code QR, etc.) qui peuvent être lues à partir des données d'image et que l'unité de commande (2) est conçue pour déterminer le processus qui peut être déclenché par le bouton de confirmation virtuel en fonction des informations d'identification.

15. Procédé de fabrication d'un produit ou d'un produit partiel comprenant au moins une étape de fabrication manuelle effectuée par un ouvrier (W),
**caractérisé en ce que** l'étape de fabrication manuelle est effectuée sur un lieu de fabrication (3) doté d'un système de surveillance et d'opération selon l'une des revendications précédentes.
